# EUROPÄISCHE PATENTSCHRIFT

(11) **EP 2 777 795 B1**
(45) Veröffentlichungstag und Bekanntmachung des Hinweises auf die Patenterteilung: **09.03.2016**
(21) Anmeldenummer: 13159331.1
(22) Anmeldetag: 15.03.2013
(51) Int. Cl.: B01D 39/16

(54) **STAUBSAUGERFILTERBEUTEL**
VACUUM CLEANER FILTER BAG
SAC D'ASPIRATEUR

(43) Veröffentlichungstag der Anmeldung: 17.09.2014
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- DE-T2- 60 032 223
- DE-U1-202007 018 375

## Beschreibung

Die Erfindung betrifft Staubsaugerfilterbeutel mit einer ersten Filterschicht und einer zweiten Filterschicht zum Einsatz in Hausstaubsaugergeräten.

Derartige Staubsaugerfilterbeutel sind im Stand der Technik bekannt. So offenbart die EP 1 258 277 A1 einen mehrlagigen Vliesbeutel mit Grob- und Feinfilterlage. Die Feinfilterlage, die beispielsweise durch eine Meltblown-Lage gebildet wird, soll eine hohe Abscheideleistung für Feinstäube aufweisen, so dass eine möglichst geringe Penetration des Staubsaugerfilterbeutels durch kleinste Teilchen auftritt. Die Grobfilterlage soll hingegen eine hohe Staubspeicherkapazität für größere Teilchen aufweisen, um ein Verstopfen der Feinfilterlage durch diese Teilchen zu vermeiden.

Die DE 101 20 223 B4 beschreibt einen mehrlagigen Luftfilter umfassend eine Filterschicht aus einer Kombinationen von Spunbond mit Meltblown-Vliesstoff oder aus einem Spunbond-Meltblown-Spunbond-Laminat und eine diese rohgasseitig überdeckende Vorfilterschicht, wobei die Vorfilterschicht einen trocken gelegten und elektrostatisch wirksamen Stapelfaservliesstoff aufweist, dessen Flächengewicht 10 bis 100 g/m² beträgt. Der trocken gelegte elektrostatisch wirksame Stapelfaservliesstoff weist dabei eine Luftdurchlässigkeit von größer gleich 700 l/m²/s, vorzugsweise von größer gleich 1000 l/m²/s bei einem Differenzdruck von 200 Pa, einen NaCl-Durchlassgrad von kleiner gleich 40 % vorzugsweise von kleiner gleich 30 % und einen Differenzdruck von kleiner 20 Pa auf. Die Vorfilterschicht ist aus Stapelfasern mit einem Titer < 10 dtex hergestellt. Die Vorfilterschicht kann auch aus Stapelfasern mit einem Titer von 0,5 bis 5 dtex hergestellt sein mit einem Flächengewicht von 30 bis 60g/m².

Dokument DE 600 32 223 T2 betrifft einen Staubsaugerfilterbeutel mit zwei Seitenwänden aus jeweils Film-Verbundmaterial-Laminat. Das Filtermaterial-Laminat ist mit mindestens einer inneren Diffusionsschicht versehen. Geeignete Diffusionsschichten sind zum Beispiel Spinnvliese aus thermoplastischen Fasern und verdichtete kardierte Gewebe.

Um die Funktion der Filterschichten zu verbessern, ist die Zusammensetzung des anfallenden Staubes, die Strömungsgeschwindigkeit der Luft, die Größe und die Form des zur Verfügung stehenden Bauraumes im Staubsauger zu berücksichtigen. Der zur Verfügung stehende Bauraum schränkt durch seine Größe, seine Form und sein Volumen die einsetzbare Materialqualität hinsichtlich Dicke, Grammatur und Steifheit ein. Der durch das Staubsauger vorgegebene Volumenstrom und damit die Mediendurchtrittsgeschwindigkeit wirken sich auf die Staubspeicherkapazität der Grobfilterschicht aus. Die Abstimmung dieser Parameter ist komplex. Einfache Regeln sind kaum festzulegen. So hat sich gezeigt, dass eine Erhöhung der Dicke oder der Grammatur der Grobfilterschicht nicht zwangsläufig zu einer verbesserten Standzeit des Staubsaugerfilterbeutels führt. Eine Änderung der Dicke, Dichte oder Geometrie oder der Mischung der in der Grobfilterschicht eingesetzten Fasern führt darüber hinaus oft zu unerwarteten und unerwünschten Effekten.

Angesichts des Vorangegangen liegt der Erfindung die Aufgabe zugrunde, einen Staubsaugerfilterbeutel mit verbesserten Filtereigenschaften bereitzustellen. Diese Aufgabe wird durch einen Staubsaugerfilterbeutel mit den Merkmalen des Anspruchs 1 gelöst.

Der erfindungsgemäße Staubsaugerfilterbeutel umfasst eine erste Filterschicht und eine zweite Filterschicht, wobei die erste Filterschicht in Luftströmungsrichtung vor der zweiten Filterschicht angeordnet ist, und wobei die erste Filterschicht mindestens 3 und höchstens 25 Einzellagen, insbesondere mindestens 5 und höchstens 15 Einzellagen, aufweist, wobei jede Einzellage ein trockengelegter Vliesstoff mit einem Flächengewicht von 5 g/m² bis 50 g/m², insbesondere mit einem Flächengewicht von 8 g/m² bis 30 g/m², ist.

Überraschenderweise hat sich gezeigt, dass eine derartige Ausbildung der ersten Filterschicht hinsichtlich der Staubspeicherkapazität bei vorgegebener Grammatur (Flächengewicht) und Zusammensetzung eine einfache und effektive Möglichkeit ist, die Leistung des Filterbeutels zu verbessern. Dazu wird die erste Filterschicht aus einer Vielzahl von (leichten) Einzellagen aufgebaut. Gegenüber einer Einzellage mit demselben Aufbau (Art, Länge, Durchmesser der Fasern) und mit gleichem Gesamtflächengewicht verbessert sich überraschenderweise die Staubspeicherfähigkeit der ersten Filterschicht wesentlich. Die erste Filterschicht kann damit die Funktion einer Grobfilterschicht erfüllen, wohingegen die zweite Filterschicht als Feinfilterschicht dienen kann.

Der Begriff "Vliesstoff" wird im Sinne der Norm EN ISO 9092:2011 verwendet. Demnach sind Vliesstoffe Strukturen textilen Materials, wie Faserstrukturen, Endlosfilamente oder Kurzfasergarne unabhängig von ihrer Eigenschaft oder Herkunft, die durch irgendein Verfahren zu einem Flächengebilde geformt wurde und durch irgendein Verfahren gebunden wurden, ausgenommen die Verflechtung von Garnen wie in gewobenem Gewebe, geknüpften Gewebe, Maschenware, Spitze oder getuftetem Gewebe. Film- und Papierstrukturen werden nicht als Vliesstoffe angesehen. Einen Vliesstoff erhält man somit, indem zunächst eine Vliesbildung und danach eine Vliesverfestigung durchgeführt werden. Die Vliesbildung erfolgt durch ein Trockenvliesverfahren, ein Nassvliesverfahren oder ein Spinnvliesverfahren, wobei zu letzterem auch Spezialtechniken wie das Schmelzspinnen (Meltblown) gehört. Die Verfestigung kann mit chemischen Mitteln, durch Wärmeeinwirkung und/oder durch mechanische Verarbeitung erfolgen. Es wird darauf hingewiesen, dass diese begriffliche Unterscheidung zwischen "Vlies" (im Englischen: "web" oder "nonwoven-web") und "Vliesstoff" (im Englischen: "nonwoven" oder "nonwoven fabric") im Stand der Technik nicht immer klar gemacht wird. Der trockengelegte Vliesstoff kann Stapelfasern umfassen, insbesondere ausschließlich umfassen.

Die hier genannten "Vliesstoff-Einzellagen" der ersten Filterschicht sind somit jeweils verfestigte Vliese (und damit Vliesstoffe), von denen jedes eine selbstragende und stabile Lage bildet. Nicht gemeint sind hingegen aufeinandergelegte Vliese (oder auch Zellstoffwatte), die danach gemeinsam verfestigt werden. So sind beispielsweise aus dem Stand der Technik aufeinandergelegte kardierte Vliese bekannt, die anschließend mittels Vernadelung verfestigt und dabei auch miteinander verbunden werden. Auf diese Weise werden jedoch nicht mehrere Vliesstoff-Einzellagen sondern nur ein einzelner (dickerer) Vliesstoff erhalten.

Auch die aus dem Stand der Technik bekannten Airlaid-Vliesstoffe, bei denen im Fertigungsprozess zunächst mehrere Lagen loser Stapelfasern aufeinander abgelegt werden, die dann z. B. durch thermisches Aktivieren von Schmelzfasern miteinander verbunden werden, sind keine Vliesstoff-Einzellagen im Sinne der Erfindung.

Die Staubsaugerfilterbeutel sind insbesondere für Haushaltsstaubsauger, d. h. zur Verwendung in Haushaltsstaubsaugern, vorgesehen.

Die erste Filterschicht (umfassend die oben genannte Mehrzahl von Einzellagen) kann ein Flächengewicht von wenigstens 25 g/m² und/oder höchstens 300 g/m², insbesondere ein Flächengewicht von wenigstens 50 g/m² und/oder höchstens 200 g/m² aufweisen. Ein derartiges Gesamtflächengewicht der ersten Filterschicht hat sich als vorteilhaft für die Herstellung von Staubsaugerfilterbeuteln erwiesen.

Die erste Filterschicht kann eine Luftdurchlässigkeit von mehr als 1500 l/(m²s), insbesondere von mehr als 2000 l/(m²s) aufweisen. Insbesondere kann bei einem Flächengewicht von bis zu 150 g/m² die Luftdurchlässigkeit der ersten Filterschicht mehr als 2000 l/(m² s) betragen. Bei einem Flächengewicht von wenigstens 50 g/m² kann die Luftdurchlässigkeit der ersten Filterschicht mehr als 1500l/(m²s) betragen.

Jede Einzellage der ersten Filterschicht kann eine Luftdurchlässigkeit von mehr als 6000 l/(m²s) aufweisen, insbesondere wenigstens 7000 l/(m²s). Die Luftdurchlässigkeit kann auch größer oder gleich 7500 l/(m²s) sein.

Derartige Luftdurchlässigkeiten führen zu einem hohen Saugluftstrom des Staubsaugers.

Bei den zuvor beschriebenen Staubsaugerfilterbeuteln weist die erste Filterschicht eine Penetration von mehr als 60 %, insbesondere mehr als 75 %, auf. Alternativ oder zusätzlich kann die zweite Filterschicht eine Penetration von weniger als 40 %, insbesondere weniger als 25 % oder weniger als 10 %, aufweisen. Die zweite Filterschicht kann insbesondere eine Penetration von weniger als 1,5 % aufweisen.

Die genannten unteren Grenzen für die Penetration der ersten Filterschicht führen zu einer besonders geeigneten Grobfilterwirkung. Mit anderen Worten erlaubt dies in vorteilhafter Weise den Einsatz der ersten Filterschicht als Grobfilterschicht. Die oberen Grenzen für die zweite Filterschicht führen zu einer bevorzugten Feinfilterfunktion, so dass die zweite Filterschicht als Feinfilterschicht verwendbar ist.

Bei den zuvor beschriebenen Staubsaugerfilterbeuteln kann jede Einzellage der ersten Filterschicht eine Penetration von mehr als 90 %, insbesondere mehr als 95 %, aufweisen. Dies ermöglicht ein Eindringen von Partikeln zu in Luftströmungsrichtung tiefer gelegenen oder weiter hinten angeordneten Lagen, was ein vorteilhaftes Einlagern von Partikeln zur Folge hat. Die Staubspeicherkapazität der ersten Filterschicht wird damit erhöht.

Die Dicke der ersten Filterschicht der zuvor beschriebenen Staubsaugerfilterbeutel kann größer oder gleich 0,8 mm/(100 g/m²), insbesondere größer oder gleich 1 mm/(100 g/m²), und/oder kleiner oder gleich 2 mm/(100 g/m²), insbesondere kleiner oder gleich 1,5 mg/(100 g/m²), sein. Eine Einschränkung auf Dicken größer/gleich die genannten Untergrenzen für die Dicke der ersten Filterschicht führt zu einer verbesserten Staubspeicherkapazität. Eine Einschränkung auf Dicken kleiner/gleich die oberen Dickengrenzen ermöglicht eine einfachere Entfaltung des Beutels im Bauraum des Staubsaugers. Insbesondere kann die Dicke jeder einzelnen Lage der ersten Filterschicht kleiner oder gleich 0,5 mm sein.

Bei den zuvor beschriebenen Staubsaugerfilterbeuteln kann die erste Filterschicht einen Druckverlust von weniger als 2 mm H₂O aufweisen. Dies führt zu einem verbesserten Saugverhalten im Betrieb in einem Staubsauger. Insbesondere kann jede Einzellage der ersten Filterschicht einen Druckverlust von weniger als 1 mm H₂O aufweisen.

Jede Einzellage der ersten Filterschicht der zuvor beschriebenen Staubsaugerfilterbeutel kann Stapelfasern mit einem Titer von wenigstens 1 dtex und/oder höchstens 20 dtex, insbesondere von wenigstens 2 dtex, insbesondere von wenigstens 5 dtex, und/oder höchstens 15 dtex, aufweisen. Es hat sich herausgestellt, dass derartige Fasertiter bei der Beladung des Staubsaugerfilterbeutels mit Staub zu einem geringen Volumenstromabfall führen, womit die Verstopfungsneigung des Beutels verringert wird. Die Stapelfasern können insbesondere einen Titer von höchstens 12 dtex haben.

Jede Einzellage der ersten Filterschicht der zuvor beschriebenen Staubsaugerfilterbeutel kann eine kardierte Lage oder eine Airlaid-Lage sein. Dabei kann insbesondere in der ersten Filterschicht eine der Einzellagen eine kardierte Lage und eine andere der Einzellagen eine Airlaid-Lage sein. Durch ein derartiges "Mischen" von kardierten und Airlaid-Lagen kann die erste Filterschicht in vorteilhafter Weise für eine gewünschte Grobfilterfunktion eingestellt werden. Die verschiedenen Einzellagen können jeweils Stapelfasern mit unterschiedlichem Titer aufweisen. Insbesondere kann die erste Filterschicht, in der Abfolge der Einzellagen, einen Titergradienten aufweisen. Vorzugsweise weist die am weitesten stromaufwärts angeordnete Einzellage Stapelfasern mit dem größten Titer und die am weitesten stromabwärts angeordnete Einzellage Stapelfasern mit dem kleinsten Titer auf.

Die Einzellagen der der ersten Filterschicht können gleich oder unterschiedlich ausgebildet sein. Insbesondere können sie hinsichtlich der folgenden Parameter gleich oder unterschiedlich sein: Luftdurchlässigkeit, Flächengewicht, Fasermaterial, Fasertiter, Penetration, Dicke, Fasermischung.

Die Fasern der ersten Filterschicht der zuvor beschriebenen Staubsaugerfilterbeutel können Chemiefasern, insbesondere aus Polypropylen oder Polyester, umfassen. Der Anteil an Chemiefasern unter den Fasern der ersten Filterschicht kann wenigstens 90 %, insbesondere wenigstens 95 %, sein. Die Fasern der ersten Filterschicht können vollständig Chemiefasern sein. Die Chemiefasern können Monokomponenten und/oder Bikomponentenfasern sein. Neben den Chemiefasern können die Fasern der ersten Filterschicht auch pflanzliche Fasern, beispielsweise Zellstofffasern, umfassen.

Bei den zuvor beschriebenen Staubsaugerfilterbeuteln können die Einzellagen der ersten Filterschicht entlang des Randes miteinander verbunden sein. Insbesondere sollen die Einzellagen vorzugsweise nicht vollflächig miteinander verbunden sein. Die Verbindung kann mittels Verschweißens oder Verklebens erfolgen. Die Einzellagen der ersten Filterschicht können insbesondere ausschließlich entlang des Randes miteinander verbunden sein. Entlang des Randes bedeutet, dass eine Verbindungslinie oder ein Verbindungsbereich (beispielsweise in Form eines Streifens) parallel zum Rand der Einzellagen oder parallel zum Beutelrand verläuft. Die Verbindungslinie oder der Verbindungsbereich können eine Klebe- oder Schweißlinie oder ein Klebe- oder Schweißbereich sein; diese werden manchmal auch Klebe- oder Schweißnaht genannt. Die Verbindungslinie oder der Verbindungsbereich kann beispielsweise einen oder mehrere Millimeter vom Rand entfernt verlaufen. Vorzugsweise beträgt der Abstand zum Rand weniger als 10 mm, insbesondere weniger als 5 mm.

Zusätzliche Verbindungspunkte oder -stellen (neben der Verbindung entlang des Randes) sind jedoch auch möglich. Vorzugsweise sind wenigstens 90 %, insbesondere wenigstens 95 %, der Fläche jeder Einzellage innerhalb der Verbindung (bspw. der Verbindungslinie oder des Verbindungsbereichs) entlang des Randes nicht mit der oder den benachbarten Einzellagen verbunden.

Auf diese Weise können sich Partikel auch zwischen den Einzellagen ablagern, was eine Erhöhung der Staubspeicherkapazität zur Folge hat.

Die zweite Filterschicht kann eine oder mehrere Meltblownlagen umfassen, insbesondere daraus bestehen. In Kombination mit den zuvor beschriebenen ersten Filterschichten lässt sich auf diese Weise eine vorteilhafte Feinfilterschicht herstellen. Die Meltblownlage kann Nanofasern enthalten. Alternativ oder zusätzlich kann die zweite Filterschicht eine oder mehrere Nanofaserlagen umfassen. Eine solche Nanofaserlage kann beispielsweise mit einer Meltblownlage verbunden sein. Die Nanofasern können einen mittleren Durchmesser von höchstens 500 nm aufweisen. Die Nanofasern können mittels Elektrospinnen erhalten worden sein.

Die zuvor beschriebenen Staubsaugerfilterbeutel können weiterhin eine Stabilitätslage und/oder eine Schutzlage umfassen. Derartige Stabilitäts- und/oder Schutzlagen können beispielsweise ein Spinnvliesstoff (Spunbond) und/oder ein Netz, insbesondere ein extrudiertes Netz, sein. Derartige Stabilitäts- und/oder Schutzlagen können in Luftströmungsrichtung vor der ersten Filterschicht und/oder nach der zweiten Filterschicht angeordnet sein.

Die zuvor beschriebenen Staubsaugerfilterbeutel können grundsätzlich in jeder aus Vliesstoffen konfektionierbaren Beutelform ausgebildet sein. Sie können insbesondere als Flachbeutel oder als Klotz- oder Blockbodenbeutel ausgebildet sein. Bei einem Flachbeutel ist der Staubsaugerfilterbeutel dann derart ausgebildet, dass er keinen Klotzboden bzw. Blockboden aufweist. Als Klotz- oder Blockboden wird ein Boden bezeichnet, durch den der Beutel eine dreidimensionale äußere Form erhält. Unter einer "dreidimensionalen" äußeren Form wird eine Ausdehnung des Beutels in drei Dimensionen verstanden, die über die Ausdehnung des Beutels in einer dritten Dimension lediglich aufgrund der Filtermaterialdicke hinausgeht. Die Aufgabe des Bodens besteht üblicherweise darin, den Filterbeutel zu stabilisieren. Bei Beuteln aus Papierfiltermaterial wird der Klotz- oder Blockboden durch eine geeignete Faltung des Filtermaterials erhalten. Bei Vliessfoffbeuteln lässt sich ebenfalls eine entsprechende äußere Form erhalten, allerdings nicht notwendigerweise durch eine Faltung; auch solche Beutel sollen hier als Block- oder Klotzbodenbeutel verstanden werden. Beispiele für einen Blockbodenfilterbeutel sind aus der DE 20 2005 016 309, EP 2 067 427, EP 1 677 660, DE 103 48 375 oder DE 10 2005 060 032 bekannt.

Flachbeutel sind beispielsweise in der US 5,647,881 oder der EP 1 661 500 beschrieben. Bei einem Flachbeutel werden beispielsweise zwei Beutelwandmaterialien aufeinander gelegt und an den Rändern miteinander verbunden. Die Verbindung kann insbesondere mittels Verschweißen oder Verkleben erfolgen. Die Beutelwandmaterialien sind typischerweise rechteckig ausgebildet. Zwischen den beiden Beutelwandmaterialien wird insbesondere im Betrieb des Staubsaugerfilterbeutels ein Hohlraum gebildet, der mit Staub gefüllt wird. In einem der Beutelwandmaterialien befindet sich die Einlassöffnung des Beutels. Jedes Beutelwandmaterial umfasst zwei oder mehr Filterschichten, wobei die zwei oder mehr Filterschichten die zuvor beschriebene erste und zweite Filterschicht umfassen. Vorzugsweise sind die erste und zweite Filterschicht in beiden Beutelwandmaterialien vorhanden. Alternativ kann ein Flachbeutel auch durch Bildung des Staubsaugerfilterbeutels als Schlauchbeutel erhalten werden, wie es beispielsweise in der EP 2 359 730 beschrieben ist. Der Flachbeutel kann eine oder mehrere Seitenfalten haben; dies ist beispielsweise in der DE 20 2005 000 917 gezeigt.

Weitere Merkmale und Vorteile werden nachfolgend anhand der Figuren beschrieben. Dabei zeigt:
- Figur 1A: eine schematische Querschnittsansicht eines Staubsaugerfilterbeutels;
- Figur 1B: eine schematische Draufsicht eines Staubsaugerfilterbeutels;
- Figur 2: eine schematische Querschnittsansicht des Filtermaterialaufbaus eines Beispiels einer Beutelwand;
- Figur 3: eine Grafik zur Abhängigkeit des Druckverlusts einer Grobfilterschicht für verschiedene Materialien;
- Figur 4: eine Grafik zur Abhängigkeit der Luftdurchlässigkeit einer Grobfilterschicht für unterschiedliche Materialien;
- Figur 5: eine Tabelle zum Volumenstromabfall;
- Figur 6: eine Tabelle zum Volumenstromabfall.

Für die Messung der verschiedenen Parameter wurden folgende Verfahren verwendet: Das Flächengewicht wurde gemäß EN 29073-1:1992 bestimmt. Die Dicke der Materialien wurde gemäß EN ISO 9073-2:1996 (immer nach Verfahren A für normale Vliesstoffe) bestimmt. Die Luftdurchlässigkeit wurde gemäß EN ISO 9237:1995 mit einer Fläche von 20 cm² und einem Differenzdruck von 200 Pa bestimmt. Die Penetration wurde mit dem Gerät CERTITEST TSI 8130 bei 86 l/min bestimmt. Als Aerosol wurde mit dem Aerosolgenerator 8118A erzeugtes NaCl-Aerosol verwendet. Der Druckverlust in mm H₂O wurde ebenfalls mit dem Gerät TSI 8130 bei 86 l/min bestimmt.

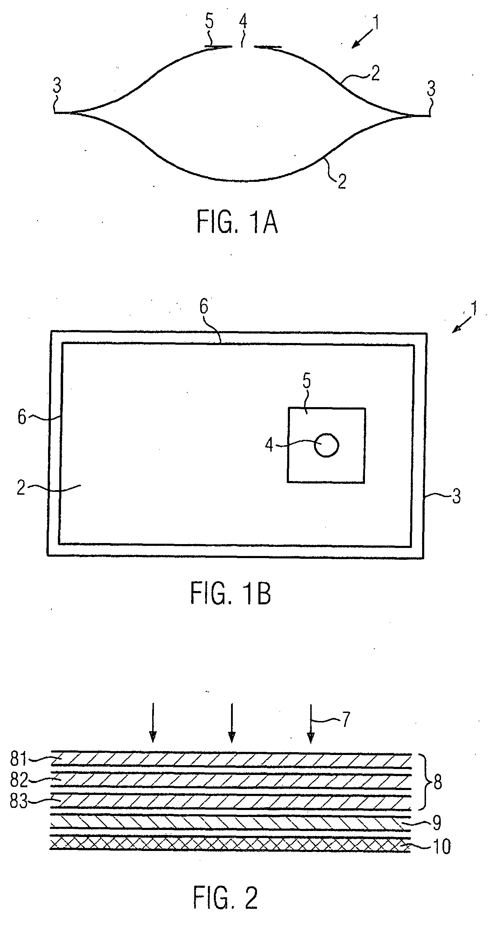

Figur 1A zeigt schematisch einen Querschnitt durch einen Staubsaugerfilterbeutel 1 in Form eines (aufgeblähten) Flachbeutels, für den eine Draufsicht in Figur 1B gezeigt ist. Die Beutelwand besteht aus zwei aufeinandergelegten Beutelwandmaterialien 2 mit rechteckiger Form, die entlang des Randes 3 miteinander verbunden sind. In einem der beiden Wandstücke 2 ist eine Einlassöffnung 4 vorgesehen, an der eine Halteplatte 5 befestigt ist. Die Halteplatte 5 dient zum Haltern des Staubsaugerfilterbeutels im Innern eines Staubsaugers. Eine derartige Halteplatte kann beispielsweise mit dem Filtermaterial der Beutelwand verklebt oder verschweißt sein. Die Verbindung der beiden Beutelwandmaterialien 2 erfolgt typischerweise mittels Verschweißen oder Verkleben. Durch die umlaufende Verbindung entsteht ein Saum bzw. eine Klebe- oder Schweißnaht 6.

Im Betrieb des Staubsaugerfilterbeutels wird ein mit Staub beladener Luftstrom durch die Eintrittsöffnung 4 in den Beutel gesaugt. Die Luft tritt daraufhin durch die Beutelwand aus dem Filterbeutel aus, so dass die Luftströmungsrichtung aus dem Innern des Beutels nach außen zeigt.

Figur 2 zeigt schematisch den Aufbau des Filtermaterials einer Beutelwand, wie sie beispielsweise in einem Flachbeutel gemäß Figur 1 verwendet werden kann. Die Pfeile 7 bezeichnen die Luftströmungsrichtung im Betrieb des Staubsaugerfilterbeutels.

In Luftströmungsrichtung ist zunächst eine Grobfilterschicht 8 vorgesehen, die der oben beschriebenen ersten Filterschicht entspricht. Danach folgt eine Feinfilterschicht 9, die der oben beschriebenen zweiten Filterschicht entspricht. Außen am Beutel ist noch eine Stabilitätslage 10 vorgesehen.

Die Grobfilterschicht 8 besteht im gezeigten Beispiel aus drei Einzellagen 81, 82 und 83, die in Form von Vliesstofflagen vorgesehen sind. Jede dieser Einzellagen ist somit selbsttragend. Dies wird durch ein entsprechendes Vliesbindungs- oder -verfestigungsverfahren, beispielsweise Kalandrieren, eines Vlieses erreicht. Das zugrunde liegende Vlies ist ein trockengelegtes Vlies, beispielsweise ein kardiertes Vlies oder ein Airlaid-Vlies. Derartige trockengelegte Vliese bestehen aus Stapelfasern, bei denen es sich insbesondere um Chemiefasern, beispielsweise aus Polypropylen oder Polyester handelt.

Die Einzellagen 81, 82 und 83 sind nicht vollflächig miteinander verbunden. Eine Verbindung liegt am Beutelrand 3 vor, wo die Einzellagen verschweißt oder verklebt sind. Innerhalb des Saums 6, dass heißt, in der vom Saum umgebenen ("eingerahmten") Fläche sind die Einzellagen nicht oder nur an vereinzelten oder diskreten Stellen (bspw. durch Klebe- oder Schweißpunkte bzw. -streifen) miteinander verbunden. Die unverbundene Fläche innerhalb der durch den Saum begrenzten Fläche soll wenigstens 90 %, vorzugsweise wenigstens 95 %, der Oberfläche betragen. Auf diese Weise kann Staub in die Einzellagen und die dazwischen befindlichen Zwischenräume eindringen und dort eingelagert werden.

Luftstromabwärts der Grobfilterschicht 8 befindet sich eine Feinfilterschicht 9, die in Form einer Meltblownlage ausgebildet ist. Am weitesten stromabwärts ist die (optionale) Stabilitätslage 10 in Form eines Spunbonds, das die mechanische Stabilität des Beutels erhöht und dem Schutz der Feinfilterlage 9 dient.

Analog zum Fall der Einzellagen ist auch die Feinfilterschicht 9 beziehungsweise die Stabilitätslage 10 mit den anderen Lagen entlang des Randes, also über die gleiche Schweiß- oder Verklebungsnaht verbunden. Ansonsten sind auch die Feinfilterschicht 9 und die Stabilitätslage 10 nicht oder nur an einzelnen beziehungsweise diskreten Stellen mit den benachbarten Lagen verbunden. Auch hier beträgt die unverbundene Fläche vorzugsweise wenigstens 90 %, insbesondere wenigstens 95 %, der Gesamtoberfläche innerhalb des Saums beziehungsweise der Verbindungsnaht.

Der vorteilhafte und überraschende Effekt der vorliegenden Erfindung ergibt sich aus den nachfolgend diskutierten Figuren.

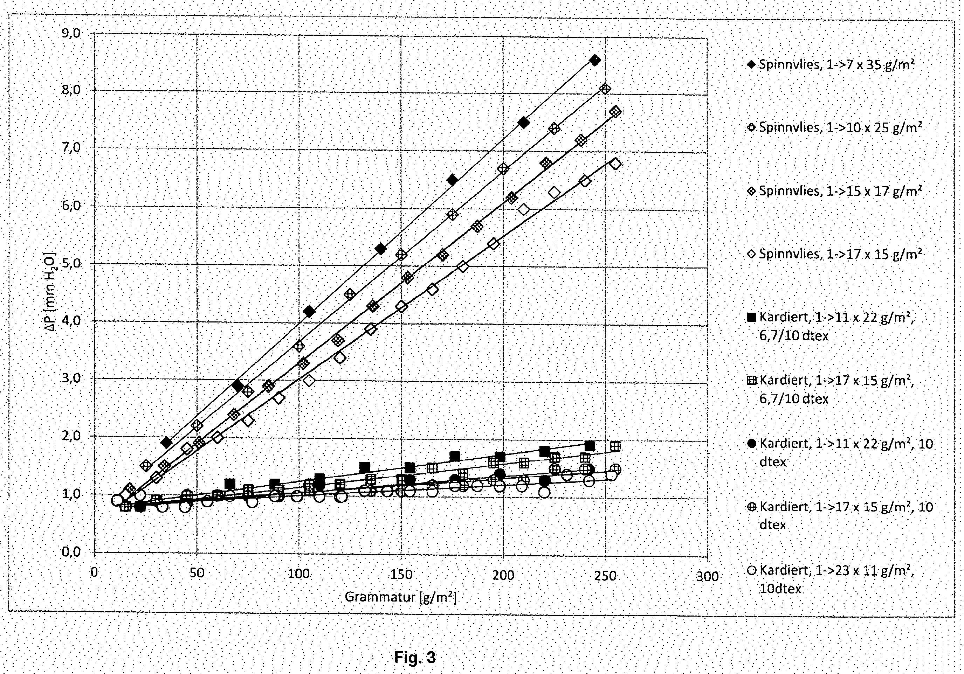

Figur 3 zeigt eine Grafik, bei der für verschiedene Filterschichten, die als Grobfilterschichten grundsätzlich in Frage kämen, der Druckverlust ΔP in Abhängigkeit des Flächengewichts (Grammatur) der Gesamtschicht, mit anderen Worten in Abhängigkeit der Anzahl der Einzellagen, aufgetragen ist. Untersucht wurden mehrlagige Spinnvliesstoffschichten (Spunbonds) sowie mehrlagige Schichten mit Einzellagen aus kardiertem und kalandriertem Vliesstoff. Bei den Spinnvliesstoffen wurden Filterschichten mit identischen Einzellagen jeweils mit einem Flächengewicht von 35 g/m² (1 bis 7 Lagen), 25 g/m² (1 bis 10 Lagen), 17 g/m² (1 bis 15 Lagen) sowie 15 g/m² (1 bis 17 Lagen) untersucht. Die Filterschichten mit kardierten Vliesstoffen bestanden aus identischen Einzellagen mit einem Flächengewicht von 22 g/m² (1 bis 11 Lagen, Fasermischung mit Titern von 6,7 dtex und 10 dtex), 15 g/m² (1 bis 17 Lagen, Fasermischung mit Titern von 6,7 dtex und 10 dtex), 22 g/m² (1 bis 11 Lagen, Titer 10 dtex), 15 g/m² (1 bis 17 Lagen, Titer 10 dtex) und 11 g/m² (1 bis 23 Lagen, Titer 10 dtex). Alle Vliesstoffe bestanden aus Polyropylen-Stapelfasern oder -Filamenten.

Wie man klar erkennen kann, steigt der Druckverlust bei den mehrlagigen Spinnvliesstoffschichten mit zunehmender Zahl der Einzellagen stark an. Im Gegensatz dazu erhöht sich der Druckverlust bei den mehrlagigen Filterschichten aus kardierten Vliesstoffen selbst bei einer hohen Anzahl von Einzellagen nur sehr geringfügig. Die Erhöhung der Zahl der Einzellagen hat somit auf den Druckverlust im Falle von kardierten Vliesstoffen kaum Auswirkungen.

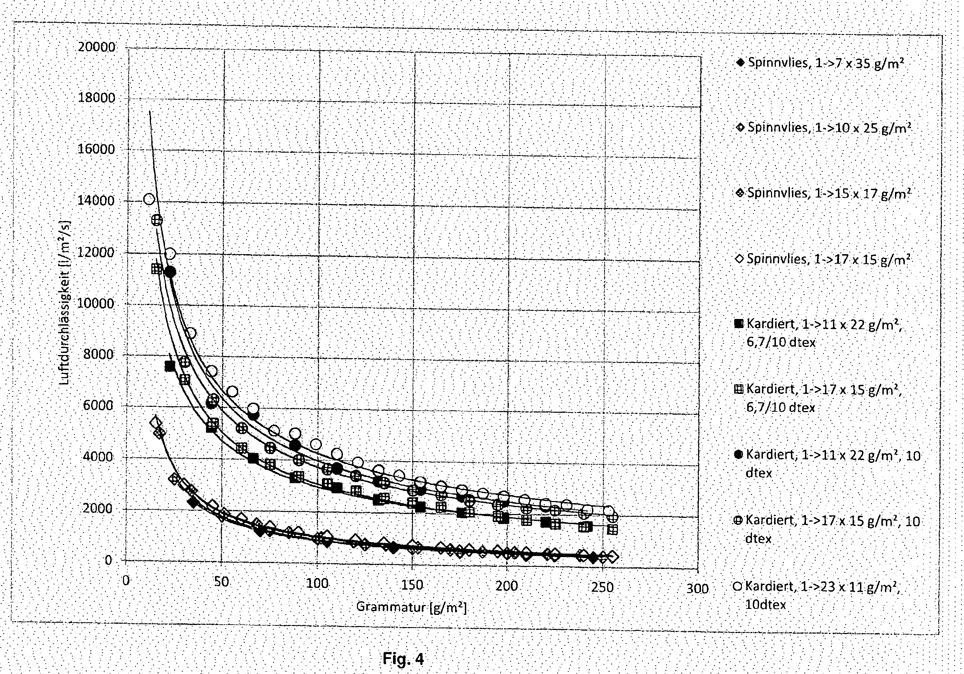

Figur 4 zeigt für die gleichen Filterschichten die Abhängigkeit der Luftdurchlässigkeit vom Gesamtflächengewicht beziehungsweise der Anzahl der Lagen. Man erkennt wiederum, dass die Luftdurchlässigkeit der mehrlagigen Spinnvliesstoffschicht signifikant geringer als die der Filterschichten aus kardierten Einzellagen ist.

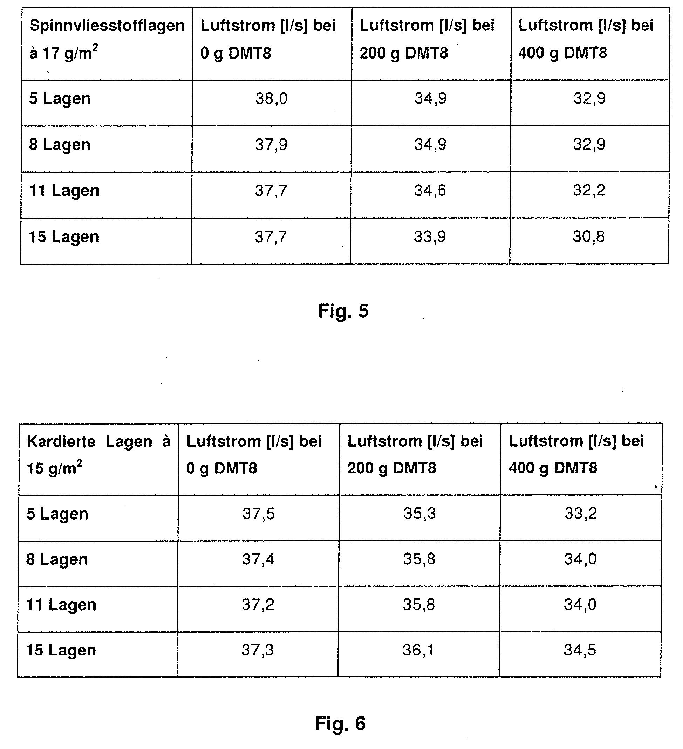

Die Tabelle der Figur 5 illustriert den Volumenstromabfall für den Fall von Staubsaugerfilterbeuteln, deren Grobfilterschicht mehrere Lagen Spinnvliesstoff mit einem Flächengewicht von jeweils 17 g/m² umfasst. Es handelt sich also um Vergleichsbeispiele, die nicht unter die Erfindung fallen.

Alle für diese Messungen eingesetzten Filterbeutel hatten folgenden prinzipiellen Aufbau:
Anströmseitig eine Grobfilterschicht mit der jeweils angegebenen Anzahl an Einzellagen, darauf folgend zwei Lagen eines Feinfiltermaterials (jeweils ein Meltblown 18 g/m²) gefolgt von einer abströmseitigen Verstärkungslage aus einem 35 g/m² Spinnvliesstoff. Die Filterbeutel hatten das Format der Miele HyClean Typ GN Filterbeutels (Mat.-Nr. 07174381 006). Diese Beutel haben eine Breite von 307 mm und eine Länge von 293 mm. Sie weisen einen sogenannten Diffusor (durchlaufend, 19 Streifen, Material: CS75T5) auf, wie er beispielsweise in der EP 2 263 507 beschrieben ist.

Die Beladung der Filterbeutel mit DMT8 Prüfstaub erfolgte gemäß der DIN EN 60312:2008. Der Prüfstaub ist erhältlich bei der DMT GmbH und Co. KG, Essen, Deutschland. Die Messung erfolgte mit einem Miele-Staubsauger Typ S8 (S8340), Sauger Nr. 00/121809066, Typ HS15, 1200 W.

Gemessen wurden Beutel mit 5, 8, 11 und 15 Einzellagen für die Grobfilterschicht. In jeder Zeile der Tabelle findet man zunächst den entsprechenden Messwert für den Volumenstrom für einen leeren/unbenutzten Beutel in l/s. Danach folgt der Messwert für den Volumenstrom bei einer Beladung des Staubsaugerfilterbeutels mit 200 g DMT Prüfstaub Typ 8. Man erkennt, dass der Volumenstrom von ursprünglich etwa 38 l/s auf etwa 34 l/s bis 35 l/s (je nach Anzahl der Lagen) abfällt.

Bei einer weiteren Staubbeladung auf insgesamt 400 g Prüfstaub ergibt sich ein weiterer Abfall auf etwa 33 l/s bis 31 l/s.

Die hierzu entsprechende Messung mit erfindungsgemäßen Staubsaugerbeuteln ist in der Tabelle von Figur 6 illustriert. Hier bestand die Grobfilterschicht (in einem Beutel ansonsten gleichen Aufbaus wie im Beispiel gemäß Figur 5) aus 5, 8, 11 und 15 Lagen kardierten Vliesstoffs mit jeweils einem Flächengewicht von 15 g/m² aus PP-Fasern mit einem Titer von 10 dtex. Der leere Beutel zeigt im Wesentlichen unabhängig von der Zahl der Einzellagen einen konstanten Volumenstrom von rund 37,5 l/s. Bei einer Beladung mit 200 g Prüfstaub beträgt der Volumenstrom bei einer Grobfilterschicht bestehend aus fünf Einzellagen immer noch mehr als 35 l/s und steigt bei einer höheren Anzahl von Einzellagen weiter an. Ein ähnliches Bild ergibt sich bei einer Gesamtbeladung von 400 g Prüfstaub, bei der der Volumenstromabfall mit höherer Anzahl von Einzellagen geringer ausfällt.

Aus diesen Untersuchungen ergibt sich, dass Staubsaugerfilterbeutel mit einer Grobfilterschicht aus mehreren Einzellagen aus kardierten Vliesstoffen klar verbesserte Eigenschaften zeigen. So bleibt der Druckverlust auch bei mehreren Lagen sehr gering, was zu einer verbesserten Saugleistung führt. Die Saugleistungskonstanz, die sich im geringeren Abfall des Volumenstromes bei der Beladung mit DMT8 Staub zeigt, wird deutlich verbessert.

Wie man diesen Messreihen entnehmen kann, zeigen sich je nach verwendetem Material (bspw. Spinnvliesstoff oder kardiertes Vliesstoff) höchst unterschiedliche Ergebnisse, die auch nicht vorhersagbar waren.

## Patentansprüche

1. Staubsaugerfilterbeutel umfassend
eine erste Filterschicht und eine zweite Filterschicht,
wobei die erste Filterschicht in Luftströmungsrichtung vor der zweiten Filterschicht angeordnet ist, und
wobei die erste Filterschicht mindestens 3 und höchstens 25 Einzellagen, insbesondere mindestens 5 und höchstens 15 Einzellagen, aufweist,
wobei jede Einzellage ein trockengelegter Vliesstoff mit einem Flächengewicht von 5 g/m² bis 50 g/m², insbesondere mit einem Flächengewicht von 8 g/m² bis 30 g/m², ist,
wobei die erste Filterschicht eine Penetration von mehr als 60 %, insbesondere mehr als 75 %, aufweist.

2. Staubsaugerfilterbeutel nach Anspruch 1, in welchem die erste Filterschicht ein Flächengewicht von wenigstens 25 g/m² und/oder höchstens 300 g/m², insbesondere ein Flächengewicht von wenigstens 50 g/m² und/oder höchstens 200 g/m², aufweist.

3. Staubsaugerfilterbeutel nach Anspruch 1 oder 2, in welchem die erste Filterschicht eine Luftdurchlässigkeit von mehr als 1500 l/(m² s), insbesondere von mehr als 2000 l/(m² s), aufweist.

4. Staubsaugerfilterbeutel nach einem der vorangegangen Ansprüche, in welchem jede Einzellage der ersten Filterschicht eine Luftdurchlässigkeit von mehr als 6000 l/(m² s), insbesondere wenigstens 7000 l/(m² s), aufweist.

5. Staubsaugerfilterbeutel nach einem der vorangegangenen Ansprüche, in welchem die zweite Filterschicht eine Penetration von weniger als 40 %, insbesondere weniger als 25 % oder weniger als 10 %, aufweist.

6. Staubsaugerfilterbeutel nach einem der vorangegangenen Ansprüche, in welchem jede Einzellage der ersten Filterschicht eine Penetration von mehr als 90 %, insbesondere mehr als 95 %, aufweist.

7. Staubsaugerfilterbeutel nach einem der vorangegangenen Ansprüche, in welchem die Dicke der ersten Filterschicht größer oder gleich 0,8 mm/(100 g/m²), insbesondere größer oder gleich 1 mm/(100 g/m²), und/oder kleiner oder gleich 2 mm/(100 g/m²), insbesondere kleiner 1,5 mm/(100 g/m²), ist.

8. Staubsaugerfilterbeutel nach einem der vorangegangenen Ansprüche, in welchem die Dicke jeder Einzellage der ersten Filterschicht kleiner oder gleich 0,5 mm ist.

9. Staubsaugerfilterbeutel nach einem der vorangegangenen Ansprüche, in welchem die erste Filterschicht einen Druckverlust von weniger als 2 mm H₂O aufweist.

10. Staubsaugerfilterbeutel nach einem der vorangegangenen Ansprüche, in welchem jede Einzellage der ersten Filterschicht einen Druckverlust von weniger als 1 mm H₂O aufweist.

11. Staubsaugerfilterbeutel nach einem der vorangegangenen Ansprüche, in welchem jede Einzellage der ersten Filterschicht Stapelfasern mit einem Titer von wenigstens 1 dtex und/oder höchstens 20 dtex, insbesondere von wenigstens 5 dtex und/oder höchstens 15 dtex, aufweist.

12. Staubsaugefilterbeutel nach einem der vorangegangenen Ansprüche, in welchem jede Einzellage der ersten Filterschicht eine kardierte Lage oder eine Airlaid-Lage ist.

13. Staubsaugerfilterbeutel nach einem der vorangegangenen Ansprüche, in welchem die Fasern der ersten Filterschicht Chemiefasern, insbesondere aus Polypropylen oder Polyester, umfassen.

14. Staubsaugerfilterbeutel nach einem der vorangegangenen Ansprüche, in welchem die Einzellagen der ersten Filterschicht entlang des Randes, insbesondere ausschließlich entlang des Randes, miteinander verbunden sind.

15. Staubsaugerfilterbeutel nach einem der vorangegangenen Ansprüche, wobei die zweite Filterschicht eine Meltblownlage umfasst.

16. Staubsaugerfilterbeutel nach einem der vorangegangenen Ansprüche, weiterhin umfassend eine Stabilitätslage und/oder eine Schutzlage.

17. Staubsaugerfilterbeutel nach einem der vorangegangenen Ansprüche, wobei der Beutel als Flachbeutel oder als Klotzbodenbeutel ausgebildet ist.

## Claims

1. Vacuum cleaner filter bag comprising
a first filter layer and second filter layer,
where said first filter layer is in air flow direction arranged upstream of said second filter layer, and
where said first filter layer comprises at least 3 and at most 25 individual plies, in particular at least 5 and at most 15 individual plies,
where each individual ply is dry-laid nonwoven fabric having a basis weight of 5 g/m² to 50 g/m², in particular having a basis weight of 8 g/m² to 30 g/m²,
where said first filter layer has a penetration of more than 60%, in particular of more than 75%.

2. Vacuum cleaner filter bag according to claim 1 in which said first filter layer has a basis weight of at least 25 g/m² and/or at most 300 g/m², in particular a basis weight of at least 50 g/m² and/or at most 200 g/m².

3. Vacuum cleaner filter bag according to claim 1 or 2 in which said first filter layer has a permeability to air of more than 1500 l/(m² s), in particular of more than 2000 l/(m² s).

4. Vacuum cleaner filter bag according to one of the preceding claims in which each individual ply of said first filter layer has a permeability to air of more than 6000 l/(m² s), in particular at least 7000 l/(m² s).

5. Vacuum cleaner filter bag according to one of the preceding claims in which said second filter layer has a penetration of less than 40%, in particular of less than 25% or less than 10%.

6. Vacuum cleaner filter bag according to one of the preceding claims in which each individual ply of said first filter layer has a penetration of more than 90%, in particular of more than 95%.

7. Vacuum cleaner filter bag according to one of the preceding claims in which the thickness of said first filter layer is greater than or equal to 0.8 mm/(100 g/m²), in particular greater than or equal to 1 mm/(100 g/m²), and/or less than or equal to 2 mm/(100 g/m²), in particular less than or equal to 1.5 mm/(100 g/m²).

8. Vacuum cleaner filter bag according to one of the preceding claims in which the thickness of each individual ply of said first filter layer is less than or equal to 0.5 mm.

9. Vacuum cleaner filter bag according to one of the preceding claims in which said first filter layer has a pressure loss of less than 2 mm H₂O.

10. Vacuum cleaner filter bag according to one of the preceding claims in which each individual ply of said first filter layer has a pressure loss of less than 1 mm H₂O.

11. Vacuum cleaner filter bag according to one of the preceding claims in which each individual ply of said first filter layer comprises staple fibers having a titer of at least 1 dtex and/or at most 20 dtex, in particular of at least 5 dtex and/or at most 15 dtex.

12. Vacuum cleaner filter bag according to one of the preceding claims in which each individual ply of said first filter layer is a carded ply or an airlaid ply.

13. Vacuum cleaner filter bag according to one of the preceding claims in which the fibers of said first filter layer comprise synthetic fibers, in particular made of polypropylene or polyester.

14. Vacuum cleaner filter bag according to one of the preceding claims in which said individual plies of said first filter layer are bonded together along the edge, in particular exclusively along said edge.

15. Vacuum cleaner filter bag according to one of the preceding claims, where said second filter layer comprises a meltblown ply.

16. Vacuum cleaner filter bag according to one of the preceding claims, further comprising a stabilizing ply and/or a protective ply.

17. Vacuum cleaner filter bag according to one of the preceding claims, where said bag is formed as a flat bag or as a block-bottom bag.

## Revendications

1. Sac filtrant d'aspirateur comprenant,
une première couche filtrante et une deuxième couche filtrante,
la première couche filtrante étant agencée devant la deuxième couche filtrante en se référant à la direction d'écoulement d'air, et
la première couche filtrante présentant au moins 3 et au plus 25 strates individuelles, en particulier au moins 5 et au plus 15 strates individuelles,
chaque strate individuelle étant un non-tissé posé à sec avec un poids par unité de surface de 5 g/m² à 50 g/m², notamment avec un poids par unité de surface de 8 g/m² à 30 g/m²,
la première couche filtrante présentant une pénétration de plus de 60%, notamment de plus de 75%.

2. Sac filtrant d'aspirateur selon la revendication 1, dans lequel la première couche filtrante présente un poids par unité de surface d'au moins 25 g/m² et/ou au plus de 300 g/m², notamment un poids par unité de surface d'au moins 50 g/m² et/ou au plus de 200 g/m².

3. Sac filtrant d'aspirateur selon la revendication 1 ou la revendication 2, dans lequel la première couche filtrante présente une perméabilité à l'air de plus de 1500 l/ (m²s), notamment de plus de 2000 l/(m²s).

4. Sac filtrant d'aspirateur selon l'une des revendications précédentes, dans lequel chaque strate individuelle de la première couche filtrante présente une perméabilité à l'air de plus de 6000 l/(m²s), notamment d'au moins 7000 l/(m²s).

5. Sac filtrant d'aspirateur selon l'une des revendications précédentes, dans lequel la deuxième couche filtrante présente une pénétration de moins de 40%, notamment de moins de 25% ou de moins de 10%.

6. Sac filtrant d'aspirateur selon l'une des revendications précédentes, dans lequel chaque strate individuelle de la première couche filtrante présente une pénétration de plus de 90%, notamment de plus de 95%.

7. Sac filtrant d'aspirateur selon l'une des revendications précédentes, dans lequel l'épaisseur de la première couche filtrante est supérieure ou égale à 0,8 mm/(100 g/m²), notamment supérieure ou égale à 1 mm/(100 g/m²), et/ou est inférieure ou égale à 2 mm/(100 g/m²), notamment inférieure ou égale à 1,5 mm/ (100 g/m²).

8. Sac filtrant d'aspirateur selon l'une des revendications précédentes, dans lequel l'épaisseur de chaque strate individuelle de la première couche filtrante est inférieure ou égale à 0,5 mm.

9. Sac filtrant d'aspirateur selon l'une des revendications précédentes, dans lequel la première couche filtrante présente une perte de charge de moins de 2 mm H₂O.

10. Sac filtrant d'aspirateur selon l'une des revendications précédentes, dans lequel chaque strate individuelle de la première couche filtrante présente une perte de charge de moins de 1 mm H₂O.

11. Sac filtrant d'aspirateur selon l'une des revendications précédentes, dans lequel chaque strate individuelle de la première couche filtrante comprend des fibres discontinues ou coupées d'un titre d'au moins 1 dtex et/ou d'au plus 20 dtex, notamment d'au moins 5 dtex et/ou d'au plus 15 dtex.

12. Sac filtrant d'aspirateur selon l'une des revendications précédentes, dans lequel chaque strate de la première couche filtrante est une couche cardée ou une couche dite 'Airlaid' c'est-à-dire obtenue par un procédé aérodynamique par voie sèche.

13. Sac filtrant d'aspirateur selon l'une des revendications précédentes, dans lequel les fibres de la première couche filtrante comprennent des fibres chimiques, notamment en polypropylène ou polyester.

14. Sac filtrant d'aspirateur selon l'une des revendications précédentes, dans lequel les strates individuelles de la première couche filtrante sont liées ensemble le long du bord, notamment exclusivement le long du bord.

15. Sac filtrant d'aspirateur selon l'une des revendications précédentes, dans lequel la deuxième couche filtrante comprend une strate ou couche obtenue par extrusion-soufflage (meltblown).

16. Sac filtrant d'aspirateur selon l'une des revendications précédentes, comprenant en outre une couche ou strate de stabilisation et/ou une couche ou strate de protection.

17. Sac filtrant d'aspirateur selon l'une des revendications précédentes, le sac étant réalisé sous forme de sac plat ou de sac à fond plat et soufflet.
